Europäisches Patentamt

(19) European Patent Office

Office européen des brevets

(11) Publication number: **0 019 384**
**B1**

# EUROPEAN PATENT SPECIFICATION

(45) Date of publication of patent specification: **01.08.84**

(51) Int. Cl.³: **A 01 N 25/04**

(21) Application number: **80301367.1**

(22) Date of filing: **25.04.80**

(54) Pesticidal formulations.

(30) Priority: **15.05.79 GB 7916862**

(43) Date of publication of application:
**26.11.80 Bulletin 80/24**

(45) Publication of the grant of the patent:
**01.08.84 Bulletin 84/31**

(84) Designated Contracting States:
**BE CH DE FR GB IT LI NL SE**

(56) References cited:
EP - A - 0 003 251
EP - A - 0 006 293
DE - A - 2 735 772
FR - A - 2 358 207
GB - A - 860 942
GB - A - 903 382
US - A - 3 190 740
US - A - 3 755 562

Chemie Ingenieur Technik Vol. 41 (1969) p. 503-7
Transactions of the ASEA Vol. 9, (1966), p. 501-6
Pesticide Science, 8 (1977) p. 243-253

The file contains technical information
submitted after the application was filed and not
included in this specification

(73) Proprietor: IMPERIAL CHEMICAL INDUSTRIES PLC
Imperial Chemical House Millbank
London SW1P 3JF (GB)

(72) Inventor: Coffee, R.A.
Verdley House
Fernhurst Haslemere Furrey (GB)
Inventor: Middleton, M.R. Plant Protect. Div.
Jealott's Hill Research Station
Bracknell Berkshire (GB)

(74) Representative: Fawcett, Richard Fennelly et al,
Imperial Chemical Industries PLC Legal
Department: Patents PO Box 6
Welwyn Garden City Herts, AL7 1HD (GB)

# 0 019 384

**Description**

This invention relates to pesticidal formulations.

In our copending UK Patent 1569707 we describe an apparatus for the electrostatic spraying of pesticides on to plants. Electrostatically charged sprays have particular advantages. They are attracted to the foliage of plants; this helps to ensure that as much as possible of the spray reaches its intended target, and as little as possible is misdirected on to the ground or carried away by the wind. Moreover, electrostatic forces promote even coating, and carry spray droplets to the underside of leaves as well as to exposed surfaces. In spite of these advantages, the electrostatic spraying of crops with liquid formulations has not come into widespread use, for lack of convenient, reliable and cheap apparatus. Now, however, the apparatus of aforesaid UK Patent 1569707 is available for the purpose. This patent application discloses the spraying of solutions of various pesticides in organic solvents.

It is known from Schultze (Zeitschrift fur angewandte Physik, 1961 (I) Band XIII, pages 11—16) that the behaviour of liquids atomising in an electrostatic field varies according to their conductivities. However, Schultze, working with apparatus different from that of UK Patent 1569707, obtains either coarse droplets, or at higher conductivities fine droplets with irregular atomisation; accordingly there is no incentive to adapt his teaching for use in spraying pesticide formulations. The use of pesticide formulations according to the present invention to obtain fine sprays of uniform particle size is not predictable from this reference.

The object of the present invention is to provide concentrated formulations of oil-insoluble pesticides suitable for spraying by the apparatus described in UK Patent 1569707, or modifications thereof.

According to the invention we provide a ready-for-use electrostatically sprayable pesticidal formulation suitable for use in electrostatic spraying apparatus to spray plants to give an even coating of pesticide on the leaves of said plants, the formulation having a viscosity at 20°C in the range of 1 to 50 $mm^2/s$, preferably 2 to 25 $mm^2/s$, characterised by comprising a dispersion of from 1 to 50% by weight of an oil-insoluble pesticide in a liquid organic diluent medium, the pesticide having a mean particle size in the range of about 1 to 30 $\mu$m and the formulation having a resistivity at 20°C in the range $1 \times 10^7$ to $1 \times 10^{10}$ ohm centimetres.

By the term "pesticide" we mean an insecticide, acaricide, herbicide, defoliant, plant fungicide, plant bactericide or plant anti-viral agent; and we also include within the term similar chemicals which are applied to plants, such as plant growth regulators. By the term "oil-insoluble", we mean soluble in the organic diluent medium used in the formulation to an extent of less than 2% by weight of 20°C. Examples of suitable oil-insoluble pesticides for use in the invention are: copper salts, zineb (zinc ethylenebis(dithiocarbamate)), maneb (polymeric manganese ethylenebis(dithiocarbamate)), mancozeb (complex of a zinc salt with maneb), captafol (1,2,3,6-tetrahydro-N-(1,1,2,2-tetrachloroethylthio)-phthalimide), captan; diclobutrazol ((2-*RS*, 3*RS*)-1-(2,4-dichlorophenyl)-4,4-dimethyl-2-(1*H*,1,2,4-triazol-1-yl)-pentan-3-ol) and like substituted triazoles (fungicides); carbaryl, menazon (S-(4,6-diamino-1,3,5-triazin-2-yl)-methyl O,O-dimethyl phosphorodithioate) (insecticides); 2,4-D acid ((2,4-dichlorophenoxy)acetic acid), MCP acid ((4-chloro-2-methylphenoxy)acetic acid), simazine (2-chloro-4,6-bis(ethylamino)-1,3,5-triazine), atrazine, paraquat salts or complexes, glyphosate, 2-amino-4-methyl-phosphinobutyrylalanylalanine (herbicides); gibberellic acid, 1-(4-chlorophenyl)-4,4-dimethyl-2-(1,2,4-triazol-1-yl)pentan-3-ol (plant growth regulators).

The foregoing are generally substantially insoluble in most organic diluent media suitable for use in the invention. Dispersions according to the invention may contain more than one pesticide; a second pesticide need not necessarily be oil-insoluble.

The pesticide to be used in the invention may be reduced to the required particle size by dry milling or wet milling. If wet milling is used, it may be milled in the presence of part or all of the organic diluent used in the final formulation. Dry milling may be followed by dispersion of the active ingredient in the organic diluent in a high speed mixer.

We find that dispersions according to the invention are readily sprayed at satisfactory rates using the apparatus of UK Patent 1569707 and will give a range of mean spray droplet sizes of from about 50 to about 200 $\mu$m in diameter, according to the strength of the electrostatic field applied to them (the stronger the field the smaller the droplets), flow rate through the apparatus and other operating conditions.

The resistivity of dispersions according to the invention is conveniently measured by measuring the resistance of a cell of standard dimensions containing the dispersion held at a temperature of 20°C, using, for example, a Keithley electrometer. It is preferred that the resistivity of the dispersions be in the range $10^7$ to $10^9$ ohm centimetres.

The viscosity of dispersions according to the invention is conveniently measured by timing the flow of a measured quantity of the dispersion through a hole of known size (as is done, for example, in the Redwood viscometer). It is preferred that the viscosity of the dispersions is in the range 2 to 25 $mm^2/s$.

The resistivity and viscosity of the dispersions depend primarily on the properties of the diluents used to make them, though they are also affected by the nature and amount of the dispersed pesticide.

2

# 0 019 384

One way of obtaining the desired properties is to mix diluents having various resistivities and viscosities. High-boiling hydrocarbon diluents, eg. paraffins, kerosene, are convenient and relatively cheap, but usually have low viscosities (eg. of the order of 3 mm²/s) and high resistivities (eg. of the order of $10^{11}$ ohm centimetres). To bring down the resistivity of these materials, they may be mixed with polar diluents such as alcohols and in particular ketonic diluents. These have lower resistivities but are also usually not viscous enough; for example, the useful diluent cyclohexanone has a resistivity of about $2 \times 10^6$ ohm centimetres, but a viscosity of only about 3 mm²/s. However the viscosity of the dispersion may be increased by addition of more viscous oil-soluble diluents, for example polybutenes eg. "Hyvis" and long-chain chlorinated hydrocarbon products such as "Cereclor" C42 or C48. The latter has a high resistivity, greater than $10^{10}$ ohm centimetres, and a high viscosity, of the order of 100 centistokes. By suitable adjustment of the proportions of three diluents such as these, a dispersion of the desired properties can easily be obtained.

The resistivity of diluents and dispersions is easily affected by the presence of water or other contaminants. It is not necessary always to use ultra-pure materials, but consistent results will only be obtained from materials of consistent composition; and formulations which have been made up with the desired properties should thereafter be protected from any further contamination, especially by water.

An alternative way of producing a dispersion with the required properties is to make up a diluent mixture or dispersion of the required viscosity but excessive resistivity (eg. from a mixture of hydrocarbons and long-chain chlorinated hydrocarbons) and then dose this with an antistatic agent to reduce the resistivity to the desired level. A suitable antistatic agent is sold for use as a static charge dissipator with hydrocarbon fuels under the name "ASA"; it consists of a complex mixture of copper and chromium cations with various organic acid anions. Other similar materials, eg. copper oleates, may also be used. This technique is not generally suitable by itself for producing dispersions having a resistivity below about $10^8$.

The pesticidal effects of the compositions of the invention are in certain circumstances better than those of conventional formulations. For example, diclobutrazol formulations according to the invention give better control of wheat rust than conventional high-volume sprays.

The following terms, used in the specification and Examples, are Registered Trademarks: "Hyvis"; "Cerechlor"; "Triton"; "Isopar"; "Solvesso"; "Arquad"; "Synperonic"; "Arylan"; "Hypax"; "Bentone"; "Sedapol"; "Exsol".

The following Examples illustrates the invention.

Example 1

The following dispersion of the plant growth regulator Compound A [1-(4-chlorophenyl)-4,4-dimethyl-2-(1,2,4-triazol-1-yl)pentan-3-ol] was made by wet milling together the active ingredient, dispersant and some of the organic diluent until the solid phase reached the desired particle size. The resulting composition was diluted with further diluent to the required concentration.

| Ingredient | Parts by weight |
|---|---|
| Compound A | 200 |
| "Triton" B (ethylene oxide/alkyd resin condensate dispersant) | 25 |
| "Isopar" L (isoparaffinic hydrocarbon oil) | 775 |

Viscosity 17 mm²/s; resistivity $2.0 \times 10^8$ ohm centimetres (both measured at 20°C); particle size of active ingredient between 1 and 10 $\mu$m.

This dispersion atomised very satisfactorily from the device illustrated in figures 1—3 of UK Patent 1569707.

Example 2

A second dispersion of Compound A was made up according to the method of Example 1. Its ingredients and properties were as follows:

| Ingredient | Parts by weight |
|---|---|
| Compound A | 200 |
| "Triton" B | 25 |
| "Isopar" L | 500 |
| Cottonseed oil | 275 |

Viscosity: 21 mm²/s; resistivity: $4 \times 10^7$ ohm cm (both measured at 20°C); mean particle size between 1 and 10 $\mu$m.

This dispersion atomised very satisfactorily from the device illustrated in figures 1—3 of UK Patent 1569707.

3

# 0 019 384

The following Examples illustrate further compositions according to the invention. Each of the compositions was made by the method of Example 1. Each has a viscosity in the range 10—40 mm²/s at 20°C. Particle sizes of the insoluble pesticides are in the range 1—10 $\mu$m.

## Example 3

| Ingredient | Parts by weight |
|---|---|
| Captan (fungicide) | 50 |
| "Triton" B | 2 |
| "Solvesso" 150 (aromatic hydrocarbon diluent) | 48 |
| | 100 |

Resistivity, 20°C=1.4×10⁸ ohm cm.
Captan is 1,2,3,6-tetrahydro-N-(trichloromethylthio)-phthalimide.

## Example 4

| Ingredient | Parts by weight |
|---|---|
| Procymidone (fungicide) | 50 |
| "Triton" B | 2 |
| Groundnut oil | 46 |
| "Arquad" 2C-75 (quaternary tetraalkyl ammonium salt-resistivity reducing agent) | 2 |
| | 100 |

resistivity, 20°C=3×10⁸ ohm cm.
Procymidone is N-(3,5-dichlorophenyl)-1,2-dimethyl-cyclopropane-1,2-dicarboximide.

## Example 5

| Ingredient | Parts by weight |
|---|---|
| Carbendazim (fungicide) | 50 |
| "Triton" B | 5 |
| "Arylan" CA (calcium dodecyl benzenesulphonate dispersing agent) | 5 |
| "Synperonic" A4 (alcohol/ethylene oxide dispersing agent) | 5 |
| "Isopar" L (isoparaffinic hydrocarbon diluent) | 35 |
| | 100 |

Resistivity, 20°C=5.4×10⁷ ohm cm.
Carbendazim is methyl benzimidazol-2-yl carbamate.

## Example 6

| Ingredient | Parts by weight |
|---|---|
| Carbendazim | 30 |
| "Synperonic" A4 | 4 |
| "Arquad" 2C | 8 |
| "Isopar" L (isoparaffinic hydrocarbon solvent) | 24 |
| Soya bean oil | 34 |
| | 100 |

Resistivity, 20°C=5.1×10⁷ ohm cm.

**0019384**

### Example 7

| Ingredient | Parts by weight |
|---|---|
| Procymidone | 40 |
| "Hypax" 450-18-50 (calcium salt of an oxidised long chain fatty acid wax) | 4 |
| "Arquad" 2C-75 | 8 |
| Odourless Kerosene | 48 |
| | 100 |

Resistivity, 20°C = 2×10⁸ ohm cm.

### Example 8

| Ingredient | Parts by weight |
|---|---|
| Carbaryl (insecticide) | 50 |
| "Hypax" 450-18-50 | 5 |
| "Arquad" 2C-75 | 1.5 |
| "Bentone" 34 Gel (modified bentonite suspending agent) | 1 |
| Odourless Kerosene | 62.5 |
| | 110 |

Resistivity, 20°C = 3.4×10⁸ ohm cm.
Carbaryl is 1-naphthyl methylcarbamate.

### Example 9

| Ingredient | Parts by weight |
|---|---|
| DDT (oil-soluble insecticide) | 25 |
| Carbaryl (oil-insoluble insecticide) | 25 |
| "Triton" B | 2.5 |
| "Solvesso" 150 | 20 |
| "Sedapol" 48 (clay suspending agent) | 3 |
| Aromatic naphtha | 24.5 |
| | 100 |

Resistivity, 20°C = 1.8×10⁸ ohm cm.
DDT is 1,1,1-trichloro-2,2-bis(4-chlorophenyl)ethane.

### Example 10

| Ingredient | Parts by weight |
|---|---|
| Atrazine (herbicide) | 25 |
| "Triton" B | 5 |
| "Isopar" G | 70 |
| | 100 |

Resistivity, 20°C = 1.7×10⁸ ohm cm.
Atrazine is 2-chloro-4-ethylamino-6-isopropylamino-1,3,5-triazine.

### Example 11

| Ingredient | Parts by weight |
|---|---|
| Glyphosate acid (herbicide) | 25 |
| "Triton" B | 5 |
| "Arquad" 2C/75 | 1 |
| "Isopar" G | 69 |
| | 100 |

Resistivity, 20°C = 7×10⁷ ohm cm.
Glyphosate is N-phosphonomethyl glycine.

### Example 12

| Ingredient | Parts by weight |
|---|---|
| 5-(2-chloro-4-trifluoromethylphenoxy)-N-methanesulphonyl-2-nitrobenzamide (herbicide) | 25 |
| "Hypax" 450:18:50 | 5 |
| Cyclohexanone | 1 |
| "Isopar" G | 69 |
| | 100 |

Resistivity, $20°C=1\times10^9$.

### Example 13

| Ingredient | Parts by weight |
|---|---|
| Paraquat ferrichloride complex (herbicide) | 25 |
| "Triton" B | 5 |
| "Isopar" G | 70 |
| | 100 |

Resistivity, $20°C=2\times10^8$ ohm cm.

Paraquat is the 1,1'-dimethyl-4,4'-dipyridilium ion.

### Example 14

| Ingredient | Parts by weight |
|---|---|
| Triadimefon (fungicide) | 25 |
| "Hypax" 450-18-50 | 5 |
| Groundnut oil | 1 |
| "Exsol" 180/220 (hydrocarbon diluent) | 64 |
| | 120 |

Resistivity, $20°C=5\times10^8$ ohm cm.

Triadimefon is 1-(4-chlorophenoxy)-3,3-dimethyl-1-(1,2,4-triazol-1-yl)butanone.

The dispersions described in the foregoing Examples have a viscosity which is rather high for use in devices working only by gravity feed, and may generally give better results when delivered to the sprayhead by a positive pumping action.

## Claims

1. Ready-for-use electrostatically sprayable pesticidal formulation suitable for use in electrostatic spraying apparatus to spray plants, the formulation having a viscosity at 20°C in the range of 1 to 50 $mm^2$/s, preferably 2 to 25 $mm^2$/s, characterised by comprising a dispersion of from 1 to 50% by weight of an oil-insoluble pesticide in a liquid organic diluent medium, the pesticide having a mean particle size in the range of about 1 to 30 $\mu$m and the formulation having a resistivity at 20°C in the range $1\times10^7$ to $1\times10^{10}$ ohm centimetres.

2. Formulation as claimed in claim 1 characterised in that the pesticide is a herbicide.

3. Formulation as claimed in claim 2 characterised in that the herbicide is paraquat.

4. Formulation as claimed in claim 2 characterised in that the herbicide is glyphosate.

5. Formulation as claimed in any of claims 1 to 4 characterised in that the mean particle size of the pesticide is less than 10 $\mu$m.

6. A formulation as claimed in any of the preceding claims characterised in that the organic diluent medium is a mixture of diluents blended to produce the desired properties of resistivity or viscosity.

7. A formulation as claimed in any of claims 1 to 6 characterised by further comprising an antistatic agent for reducing the resistivity of the formulation.

8. A method of applying pesticides to plants, characterised by spraying the plants with electrostatically charged particles of pesticidal formulations claimed in any of the preceding claims.

## Revendications

1. Formulation pesticide prête à l'emploi, pulvérisable par des moyens électrostatiques, apte à

6

**0019384**

être utilisée dans un appareil de pulvérisation électrostatique pour le traitement de plantes, la formulation ayant une viscosité à 20°C comprise dans l'intervalle de 1 à 50 mm²/s, de préférence de 2 à 25 mm²/s, caractérisée en ce qu'elle comprend une dispersion de 1 à 50% en poids d'un pesticide insoluble dans l'huile dans un milieu diluant organique liquide, le pesticide ayant un diamètre moyen de particules compris dans l'intervalle d'environ 1 à 30 $\mu$m et la formulation ayant une résistivité à 20°C comprise dans l'intervalle de $1 \times 10^7$ à $1 \times 10^{10}$ ohms-centimètres.

2. Formulation suivant la revendication 1, caractérisée en ce que le pesticide est un herbicide.

3. Formulation suivant la revendication 2, caractérisée en ce que l'herbicide est le paraquat.

4. Formulation suivant la revendication 2, caractérisée en ce que l'herbicide est le glyphosate.

5. Formulation suivant l'une quelconque des revendications 1 à 4, caractérisée en ce que le diamètre moyen des particules du pesticide est inférieur à 10 $\mu$m.

6. Formulation suivant l'une quelconque des revendications précédentes, caractérisée en ce que le milieu diluant organique est un mélange de diluants formulé de manière à créer les propriétés désirées de résistivité ou de viscosité.

7. Formulation suivant l'une quelconque des revendications 1 à 6, caractérisée en ce qu'elle comprend en outre un agent antistatique destiné à réduire la résistivité de la formulation.

8. Procédé d'application de pesticides à des plantes, caractérisé en ce qu'il consiste à pulvériser sur les plantes des particules à charge électrostatique de formulations pesticides suivant l'une quelconque des revendications précédentes.

**Patentansprüche**

1. Gebrauchsfertige elektrostatisch verspritzbare pesticide Formulierung, die sich für die Verwendung in einer elektrostatischen Spritzvorrichtung zum Bespritzen von Pflanzen eignet, welche Formulierung bei 20°C eine Viskosität im Bereich von 1 bis 50 mm²/s, vorzugsweise 2 bis 25 mm²/s, aufweist, dadurch gekennzeichnet, daß sie aus einer Dispersion von 1 bis 50 Gew.-% eines in Öl unlöslichen Pesticids in einem flüssigen organischen Verdünnungsmedium besteht, wobei das Pesticid eine mittlere Teilchengröße im Bereich von ungefähr 1 bis 30 $\mu$m aufweist und die Formulierung bei 20°C einen spezifischen Widerstand im Bereich von $1 \times 10^7$ bis $1 \times 10^{10} \Omega$ cm besitzt.

2. Formulierung nach Anspruch 1, dadurch gekennzeichnet, daß das Pesticid ein Herbicid ist.

3. Formulierung nach Anspruch 2, dadurch gekennzeichnet, daß das Herbicid aus Paraquat besteht.

4. Formulierung nach Anspruch 2, dadurch gekennzeichnet, daß das Herbicid aus Glyphosat besteht.

5. Formulierung nach einem der Ansprüche 1 bis 4, dadurch gekennzeichnet, daß die mittlere Teilchengröße des Pesticids weniger als 10 $\mu$m beträgt.

6. Formulierung nach einem der vorhergehenden Ansprüche, dadurch gekennzeichnet, daß das organische Verdünnungsmedium ein Gemisch aus Verdünnungsmitteln ist, das so gemischt ist, daß die gewünschten Eigenschaften des spezifischen Widerstands oder der Viskosität erhalten werden.

7. Formulierung nach einem der Ansprüche 1 bis 6, dadurch gekennzeichnet, daß sie weiterhin ein antistatisches Mittel für die Verringerung des spezifischen Widerstands der Formulierung enthält.

8. Verfahren zum Aufbringen von Pesticiden auf Pflanzen, dadurch gekennzeichnet, daß man die Pflanzen mit elektrostatisch geladenen Teilchen einer Pesticidformulierung bespritzt, wie sie in den vorstehenden Ansprüchen beansprucht wird.